# EUROPEAN PATENT SPECIFICATION

(11) **EP 2 117 819 B1**
(45) Date of publication and mention of the grant of the patent: **31.08.2011**
(21) Application number: 08702147.3
(22) Date of filing: 31.01.2008
(51) Int. Cl.: B29C 70/44, B29C 70/08, B29B 15/10

(54) **METHOD OF PROCESSING A COMPOSITE MATERIAL**
VERFAHREN ZUR BEHANDLUNG EINES VERBUNDMATERIALS
PROCÉDÉ DE TRAITEMENT D'UN MATÉRIAU COMPOSITE

(30) Priority: 13.02.2007 GB 0702781
(43) Date of publication of application: 18.11.2009
(73) Proprietor: AIRBUS OPERATIONS LIMITED, Filton Bristol BS99 7AR (GB)
(72) Inventor: INSTON, David, Graham, Bristol BS99 7AR (GB)
(74) Representative: Ribeiro, James Michael
(86) International application number: PCT/GB2008/050064
(87) International publication number: WO 2008/099207

(56) References cited:
- WO-A-92/02357
- WO-A-2005/105416
- US-A- 4 886 684
- US-A1- 2003 025 232

## Description

### FIELD OF THE INVENTION

The present invention relates to a method for processing a composite material. The method is particularly suited for modifying an epoxy resin composite material, but is not limited to such a material.

### BACKGROUND OF THE INVENTION

A problem with epoxy resin composite materials is that the resin can be quite brittle. A known solution to this problem is to add specific modifiers to the resin, such as polysulphone (PSu) or polyethersulphone (PES).

These modifiers are conventionally added to the resin in the form of a powder. This tends to give a very marked increase in resin viscosity. Whilst this viscosity increase can be beneficial if the composite material is provided as a pre-impregnated part (conventionally known as a "prepreg") it makes it difficult or impossible to transport the resin into reinforcement material under vacuum pressure, as required by many resin infusion processes.

One such resin infusion process is the so-called SCRIMP process (Seeman Composites Resin Infusion Moulding Process). This involves the use of a resin distribution medium (RDM) which conducts resin over and through an assembled dry fibre pre-form supported on a single-sided mould tool. After the RDM has been used, it is discarded.

WO-A-2005105416 discloses a method for processing a composite material (cf. example 1) comprising putting a layer (the thermoplastic film; cf. page 6, line 22) in contact with the composite material (the chopped strand mat fibreglass saturated with unsaturated polyester resin; cf. page 6, lines 22-25), whereby the thermoplastic material of the layer is incorporated into the composite material (since it is dissolved by the resin; cf. page 6, lines 29-30).

US-A-2003025232 describes an apparatus for fabricating fibre reinforced plastic structures comprising a resin distribution medium and a containment layer (cf. par. [0037] and [0038]).

### SUMMARY OF THE INVENTION

The invention provides a method of processing a composite material, the method comprising heating a porous layer in contact with the composite material above its melting point whereby it melts and is incorporated into the composite material.

Furthermore it is described a thermoplastic porous layer suitable for use in the method of the first aspect of the invention.

The porous nature of the layer enables it to be used in a previous processing step in which the interstitial volumes in the porous layer are evacuated, and the porous layer either transports matrix in a fluid state, or acts as a breather layer. The porous layer typically modifies a physical property of the composite material after it has become incorporated. For instance the porous layer may modify the toughness, compression strength and/or modulus of the composite material.

The porous layer may be incorporated completely into the composite material, or may be incorporated only partially leaving part of the layer intact. The porous layer may dissolve into the composite material to form a homogenous mixture, or may disperse into the composite material as a separate phase.

In certain embodiments of the invention, the method further comprises forming the composite material by:
evacuating a reinforcement material in contact with the porous layer; and
infusing the evacuated reinforcement material with a matrix in a fluid state, the matrix flowing through the porous layer and into the reinforcement material.

In this case the porous layer performs dual functions:
- it acts as a distribution layer which transports fluid matrix during the infusion process (i.e. it performs a similar function to the RDM in the SCRIMP process); and
- it modifies a property (for instance toughness, compression strength and/or modulus) of the composite material after it has become incorporated into the composite material.

The reinforcement material may be evacuated between a pair of rigid mould tools (for instance as part of a resin transfer moulding process), but more preferably the reinforcement material is evacuated under a flexible vacuum bag.

A charge for manufacturing a composite material is described, the charge comprising a dry reinforcement material in contact with a thermoplastic porous layer.

In other embodiments of the invention, the method further comprises forming the composite material by laying a stack of plies of pre-impregnated reinforcement material (commonly known as "prepreg"). In this case, no infusion step is generally required. Preferably the method further comprises evacuating the composite material in contact with the porous layer, typically under a flexible vacuum bag. In this case the porous layer can act as a "breather" layer during evacuation.

A charge for manufacturing a composite material is described, the charge comprising one or more plies, each ply comprising a reinforcement material pre-impregnated with a matrix, at least one of the plies being in contact with a thermoplastic porous layer.

The method typically further comprises evacuating the composite material at the same time as the porous layer becomes incorporated into the composite material. In this case, the vacuum assists the incorporation of the porous layer into the composite material. The composite material may be evacuated between a pair of rigid mould tools, but more preferably the composite material is evacuated under a flexible vacuum bag.

Typically the composite material comprises a thermosetting matrix phase with a cure temperature above the melting point of the porous layer, and the method further comprises curing the matrix phase.

Preferably the method further comprises cooling the composite material after the porous layer has become incorporated, whereby the incorporated material solidifies into an array of particles.

Typically the porous layer is formed from a three-dimensional network of fibres: for instance a woven or knitted network.

Typically the material forming the porous layer comprises a polysulphone or polyethersulphone.

The porous layer may comprise an external layer which contacts an external surface of the composite material, or an internal layer which contacts an internal surface of the composite material. Two or more external and/or internal layers may be provided, and in this case the layers are preferably in contact at one or more contact points which may be outside the composite material.

An apparatus for manufacturing a composite material is described, the apparatus comprising:
a mould tool;
a thermoplastic porous layer; and
a flexible vacuum bag for forming a sealed envelope, the vacuum bag having a vacuum port for evacuating the sealed envelope.

### BRIEF DESCRIPTION OF THE DRAWINGS

Embodiments of the invention will now be described with reference to the accompanying drawings, in which:
FIG. 1 is a schematic cross-sectional view of a first method of manufacturing a composite material;
FIG. 2 is a schematic cross-sectional view of a second method of manufacturing a composite material; and
FIG. 3 is a schematic cross-sectional view of a third method of manufacturing a composite material, employing a prepreg charge.

### DETAILED DESCRIPTION OF EMBODIMENT(S)

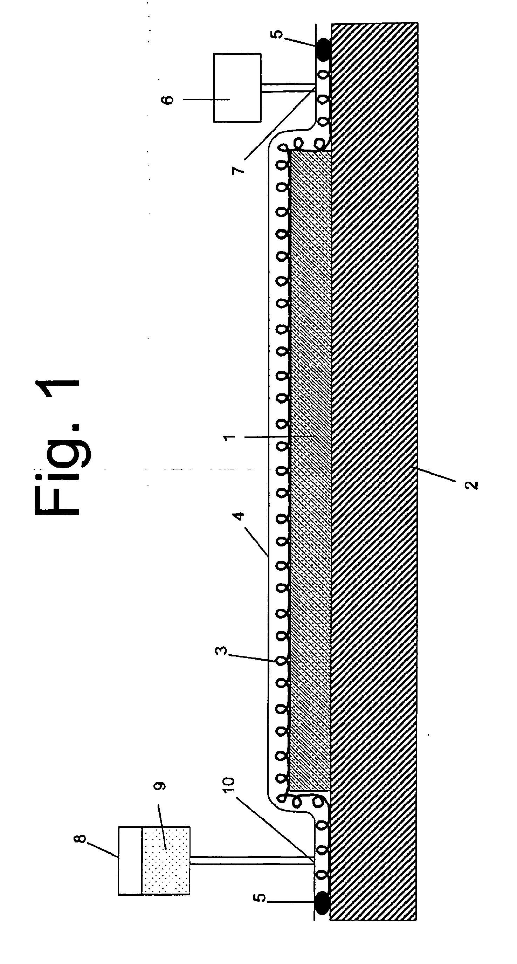

Figure 1 shows a first variant of a method of manufacturing a composite material. A pre-form 1 is laid onto a single-sided mould tool 2. The pre-form 1 comprises a stack of layers of dry carbon-fibre, or any other suitable reinforcement material. A resin distribution layer 3 is then laid onto the pre-form 1.

The layer 3 is formed from a knitted or woven fabric of monofilament fibres, the fibres being formed from a specific grade of functionally reactive polysulphone (PSu), polyethersulphone (PES), or any other suitable thermoplastic material. An example of a suitable polymer is Radel A105P, available from Solvay Advanced Polymers. Typically the material is either hydroxy, amine or carboxy functionalised.

The fibres are typically 0.1-0.2mm in diameter, the weight of the layer is typically of the order of 120 gsm, and the thickness of the layer is typically in the range of 1.6mm to 1.8mm.

A suitable fabric is "N1031" available from Newbury Engineered Textiles Limited, of Newbury, United Kingdom.

The lay-up is then completed by a release film or peel ply (not shown).

A flexible vacuum bag 4 is then laid onto the release film to form an envelope over the lay-up. The envelope is sealed against the mould tool 4 by a sealing member 5 which runs round the periphery of the lay-up.

The vacuum bag 4 has a vacuum port 7 connected to a vacuum device 6 via a resin trap (not shown), and an infusion port 10 for introducing an epoxy resin matrix 9 stored in a resin bath 8 into the envelope.

The pre-form is then infused and cured by the following steps:
1. The vacuum device 6 is operated to partially evacuate the sealed envelope. This causes the vacuum bag 4 to press against the lay-up and compress the pre-form 1. However the resin distribution layer 3 (being formed from a relatively rigid three-dimensional network of fibres) can support at least 1 atmosphere of pressure so is compressed to a lesser extent and retains its porous nature.
2. The lay-up and the epoxy resin 9 are heated up to an infusion temperature of approximately 50°C.
3. The pre-form is infused by introducing the epoxy resin 9 into the evacuated envelope. The resin flows through the evacuated interstitial volumes of the porous structure of the resin distribution layer 3, and wets the pre-form 1 from above. When the resin front reaches the vacuum port 7, it is output into the resin trap (not shown).
4. Infusion is complete when air-free resin is being continuously output at the vacuum port 7.
5. After infusion is complete, the resin distribution layer 3 is heated above its melting point (typically approximately 150°C) whereby it melts and dissolves into the matrix-infused pre-form. Vacuum pressure is maintained during this step, and the vacuum (assisted by heat) forces the dissolved material to become incorporated into the part. The dissolved material will be relatively uniformly distributed through the thickness of the part. Any non-uniformity is likely to result in an increased concentration towards the upper surface of the part, which may be beneficial if increased toughness is required at that surface.
6. The temperature is increased further to approximately 180°C, at which point the resin cures. The dissolved material precipitates out of the resin to form an array of fine liquid droplets. This material is chemically resistant to the resin at the curing temperature.
7. The composite is cooled to below the melting point of the PSu or PES which is dissolved in the resin. As a result it solidifies into an array of particles which increase the toughness of the resin.
8. The vacuum is released, and the vacuum bag peeled off from the cured composite part.
9. The composite part is lifted off the mould tool 2.

In the example of Figure 1, only a single resin distribution layer 3 is used, which is laid in contact with the upper external surface of the pre-form 1.

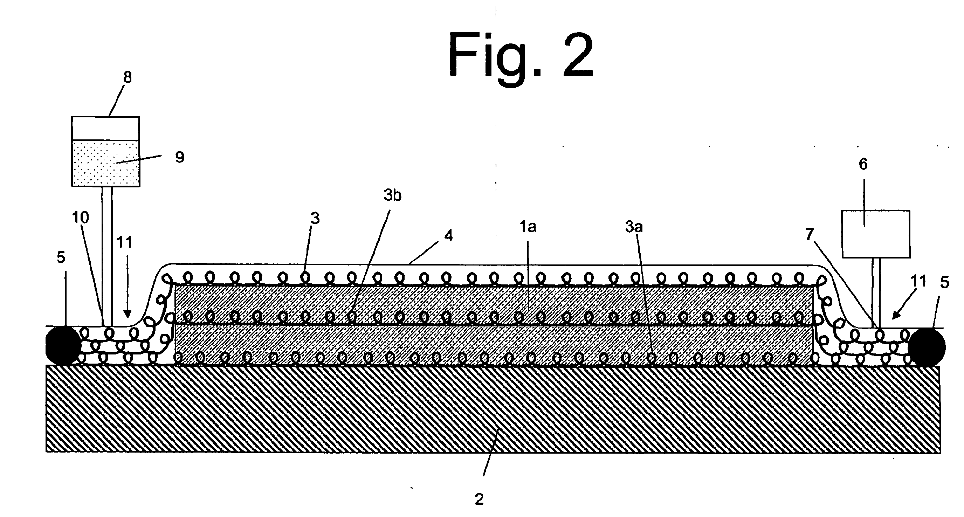

In a second variant shown in Figure 2 the lay-up is formed with two additional resin distribution layers 3a, 3b. Common elements are given the same reference numerals as in Figures 1 and 2.

The lower resin distribution layer 3a is first laid onto the mould tool 4, and the lower half of the pre-form 1a is laid on top of it. Note that the pre-form 1a is thicker than the pre-form 1 in Figure 1. In common with the upper layer 3, the lower layer 3a contacts an external surface of the pre-form 1a. In addition to the external layers 3,3a, an internal resin distribution layer 3b is embedded within the interior of the pre-form 1a. This layer 3b is laid when the lower half of the pre-form has been laid onto the mould tool, the upper half of the pre-form being laid on top of the layer 3b.

As can be seen in Figure 2, the layers 3,3a,3b are separated by the reinforcement material, but converge towards contact points 11 outside the pre-form. This ensures a consistent and uniform vacuum to transport the resin evenly through the three layers 3,3a,3b.

In comparison with Figure 1, the larger number of resin distribution layers in the arrangement of Figure 2 results in a higher concentration of dissolved material, and more uniform distribution through the thickness of the pre-form.

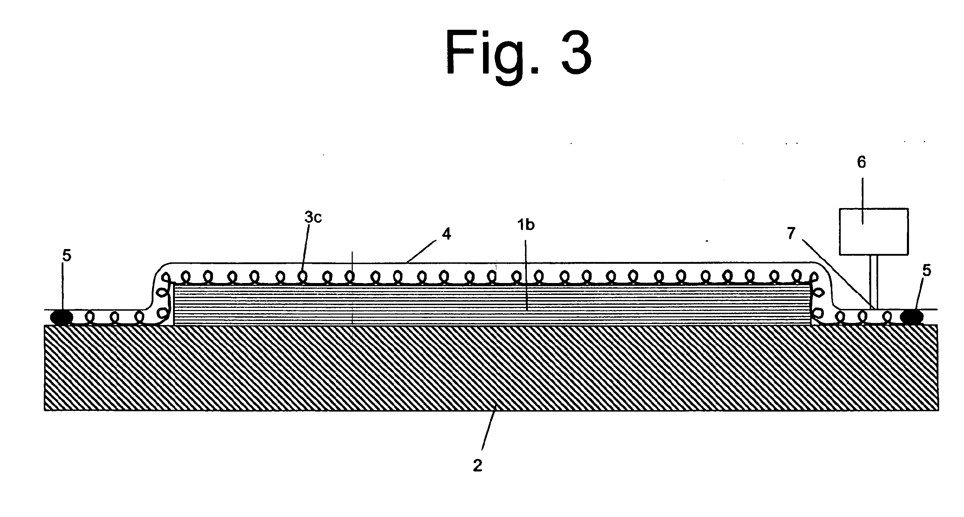

The third variant of Figure 3 employs a composite charge 1b formed from a stack of layers of prepreg tape, in contrast with the dry fibre pre-form charges 1,1a employed in Figures 1 and 2. Common elements are given the same reference numerals as in Figures 1 and 2.

Note that the infusion port and resin bath are omitted in Figure 3, although the vacuum bag 4 (and associated vacuum system) is included to consolidate the charge during curing. In a conventional prepreg lay-up, a breather layer (for instance Airweave^{™} cloth) is placed between the prepreg and vacuum bag to provide a gas flow path permitting the removal of air and other gasses during the cure process. In the variant of Figure 3 the breather layer is replaced by a layer 3c having similar characteristics to the resin distribution layer 3 shown in Figures 1 and 2: that is, a knitted or woven fabric of monofilament fibres, the fibres being formed from a specific grade of functionally reactive polysulphone (PSu), polyethersulphone (PES), or any other suitable thermoplastic material.

The charge 1b is then cured by the following steps:
1. The vacuum device 6 is operated to evacuate the sealed envelope. This causes the vacuum bag 4 to press against the lay-up and compress the charge 1b.
2. The layer 3c acts as a breather layer, permitting gasses to flow out of the lay-up through its evacuated interstitial volumes.
3. The layer 3c is heated above its melting point (typically approximately 150°C) whereby it melts and dissolves into the prepreg charge. Vacuum pressure assisted by heat forces the dissolved material to become incorporated into the part.
4. The temperature is increased further to approximately 180°C, at which point the resin cures. The dissolved material precipitates out of the resin to form an array of fine liquid droplets. This material is chemically resistant to the resin up to the curing temperature.
5. The composite is cooled to below the melting point of the PSu or PES which is dissolved in the resin. As a result it solidifies into an array of particles which increase the toughness of the resin.
6. The vacuum is released, and the vacuum bag peeled off from the cured composite part.
7. The composite part is lifted off the mould tool 2.

Note that the process does not involve an infusion step: hence the layer 3c does not perform the resin distribution function of the equivalent layers 3 in Figures 1 and 2. However the porous nature of the layer 3c makes it a suitable substitute for a conventional breather layer.

Although the invention has been described above with reference to one or more preferred embodiments, it will be appreciated that various changes or modifications may be made without departing from the scope of the invention as defined in the appended claims.

## Claims

1. A method of processing a composite material, the method comprising heating a porous layer in contact with the composite material above its melting point whereby it melts and is incorporated into the composite material.

2. The method of claim 1 further comprising forming the composite material by:
evacuating a reinforcement material in contact with the porous layer; and
infusing the evacuated reinforcement material with a matrix in a fluid state, the matrix flowing through the porous layer and into the reinforcement material.

3. The method of claim 2 wherein the reinforcement material and porous layer are evacuated under a flexible vacuum bag.

4. The method of claim 1 further comprising forming the composite material by laying a stack of plies of pre-impregnated reinforcement material.

5. The method of any preceding claim further comprising evacuating the composite material in contact with the porous layer.

6. The method of claim 5 wherein the composite material and porous layer are evacuated under a flexible vacuum bag.

7. The method of any preceding claim further comprising evacuating the composite material at the same time as the porous layer is incorporated into the composite material.

8. The method of any preceding claim wherein the composite material comprises a thermosetting matrix phase with a cure temperature above the melting point of the porous layer, and wherein the method further comprises curing the matrix phase.

9. The method of any preceding claim further comprising cooling the composite material after the porous layer has melted, whereby the dispersed material solidifies into an array of particles which increase the toughness of the composite material.

10. The method of any preceding claim wherein the porous layer is formed from a three-dimensional network of fibres.

11. The method of any preceding claim wherein the material forming the porous layer comprises a polysulphone or polyethersulphone.

12. The method of any preceding claim wherein the porous layer comprises an external layer which contacts an external surface of the composite material.

13. The method of any preceding claim wherein the porous layer comprises an internal layer which contacts an internal surface of the composite material.

14. The method of any preceding claim comprising heating two or more separate porous layers in contact with the composite material above their melting point whereby they melt and are incorporated into the composite material.

15. The method of claim 14 wherein the two or more porous layers are separate within the composite material, and converge towards one or more contact points outside the composite material.

16. The method of any preceding claim further comprising evacuating interstitial volumes in the porous layer.

## Patentansprüche

1. Verfahren zum Bearbeiten eines Verbundmaterials, wobei das Verfahren das Erwärmen einer porösen Schicht in Kontakt mit dem Verbundmaterial über seinen Schmelzpunkt umfasst, wodurch sie schmilzt und in das Verbundmaterial aufgenommen wird.

2. Verfahren nach Anspruch 1, ferner umfassend das Bilden des Verbundmaterials durch:
Evakuieren eines Verstärkungsmaterials in Kontakt mit der porösen Schicht und
Infundieren des evakuierten Verstärkungsmaterials mit einer Matrix in einem flüssigen Zustand, wobei die Matrix durch die poröse Schicht und in das Verstärkungsmaterial fließt.

3. Verfahren nach Anspruch 2, bei dem das Verstärkungsmaterial und die poröse Schicht unter einem flexiblen Vakuumbeutel.

4. Verfahren nach Anspruch 1, ferner umfassend das Bilden des Verbundmaterials durch Vorlegen eines Lagenstapels von vorimprägniertem Verstärkungsmaterial.

5. Verfahren nach einem der vorherigen Ansprüche, ferner umfassend das Evakuieren des Verbundmaterials in Kontakt mit der porösen Schicht.

6. Verfahren nach Anspruch 5, bei dem das Verbundmaterial und die poröse Schicht unter einem flexiblen Vakuumbeutel evakuiert werden.

7. Verfahren nach einem der vorherigen Ansprüche, ferner umfassend das Evakuieren des Verbundmaterials zur selben Zeit als die poröse Schicht in das Verbundmaterial aufgenommen wird.

8. Verfahren nach einem der vorherigen Ansprüche, bei dem das Verbundmaterial eine in Wärme aushärtende Matrixphase mit einer Aushärtungstemperatur über dem Schmelzpunkt der porösen Schicht enthält und wobei das Verfahren ferner das Aushärten der Matrixphase umfasst.

9. Verfahren nach einem der vorherigen Ansprüche, ferner umfassend das Kühlen des Verbundmaterials nachdem die poröse Schicht geschmolzen wurde, wodurch das verteilte Material in einer Anordnung von Teilchen erstarrt, die die Belastbarkeit des Verbundmaterials erhöhen.

10. Verfahren nach einem der vorherigen Ansprüche, bei dem die poröse Schicht aus einem dreidimensionalen Netzwerk von Fasern gebildet ist.

11. Verfahren nach einem der vorherigen Ansprüche, bei dem das die poröse Schicht bildende Material ein Polysulfon oder ein Polyethersulfon umfasst.

12. Verfahren nach einem der vorherigen Ansprüche, bei dem die poröse Schicht eine äußere Schicht enthält, die mit einer äußeren Oberfläche des Verbundmaterials in Kontakt steht.

13. Verfahren nach einem der vorherigen Ansprüche, bei dem die poröse Schicht eine innere Schicht enthält, die mit einer inneren Oberfläche des Verbundmaterials in Kontakt steht.

14. Verfahren nach einem der vorherigen Ansprüche, umfassend das Erwärmen von zwei oder mehreren separaten porösen Schichten in Kontakt mit dem Verbundmaterial über ihren Schmelzpunkt, wodurch sie schmelzen und in das Verbundmaterial aufgenommen werden.

15. Verfahren nach Anspruch 14, bei dem die zwei oder mehreren porösen Schichten innerhalb des Verbundmaterials separat sind und zu einem oder mehreren Kontaktpunkten außerhalb des Verbundmaterials zusammenlaufen.

16. Verfahren nach einem der vorherigen Ansprüche, ferner umfassend das Evakuieren von interstitiellen Volumina in der porösen Schicht.

## Revendications

1. Procédé de traitement d'un matériau composite, le procédé consistant à chauffer une couche poreuse en contact avec le matériau composite au-dessus de son point de fusion, moyennant quoi elle fond et est incorporée dans le matériau composite.

2. Procédé selon la revendication 1, consistant en outre à former le matériau composite :
en évacuant un matériau de renfort en contact avec la couche poreuse ; et
en infusant le matériau de renfort évacué avec une matrice dans un état fluide, la matrice s'écoulant à travers la couche poreuse et dans le matériau de renfort.

3. Procédé selon la revendication 2, dans lequel le matériau de renfort et la couche poreuse sont évacués sous un sac à vide flexible.

4. Procédé selon la revendication 1, consistant en outre à former le matériau composite en disposant une pile de feuilles en matériau de renfort préimprégné.

5. Procédé selon l'une quelconque des revendications précédentes, consistant en outre à évacuer le matériau composite en contact avec la couche poreuse.

6. Procédé selon la revendication 5, dans lequel le matériau composite et la couche poreuse sont évacués sous un sac à vide flexible.

7. Procédé selon l'une quelconque des revendications, consistant en outre à évacuer le matériau composite en même temps que la couche poreuse est incorporée dans le matériau composite.

8. Procédé selon l'une quelconque des revendications précédentes, dans lequel le matériau composite comprend une phase de matrice thermodurcissable avec une température de durcissement au-dessus du point de fusion de la couche poreuse, le procédé consistant en outre à durcir la phase de matrice.

9. Procédé selon l'une quelconque des revendications précédentes, consistant en outre à refroidir le matériau composite une fois que la couche poreuse a fondu, moyennant quoi le matériau dispersé se solidifie en une série de particules qui augmentent la rigidité du matériau composite.

10. Procédé selon l'une quelconque des revendications précédentes, dans lequel la couche poreuse est formée à partir d'un réseau de fibres tridimensionnel.

11. Procédé selon l'une quelconque des revendications précédentes, dans lequel le matériau formant la couche poreuse comprend du polysulfone ou du polyéthersulfone.

12. Procédé selon l'une quelconque des revendications précédentes, dans lequel la couche poreuse comprend une couche externe qui est en contact avec une surface externe du matériau composite.

13. Procédé selon l'une quelconque des revendications précédentes, dans lequel la couche poreuse comprend une couche interne qui est en contact avec la surface interne du matériau composite.

14. Procédé selon l'une quelconque des revendications précédentes, consistant à chauffer deux couches poreuses séparées ou plus en contact avec le matériau composite au-dessus de leur point de fusion, moyennant quoi elles fondent et sont incorporées dans le matériau composite.

15. Procédé selon la revendication 14, dans lequel les deux couches poreuses ou plus sont séparées à l'intérieur du matériau composite, et convergent vers un ou plusieurs points de contact à l'extérieur du matériau composite.

16. Procédé selon l'une quelconque des revendications précédentes, consistant en outre à évacuer les volumes interstitiels dans la couche poreuse.
